# EUROPEAN PATENT SPECIFICATION

(11) **EP 2 777 865 B1**
(45) Date of publication and mention of the grant of the patent: **22.02.2017**
(21) Application number: 12847482.2
(22) Date of filing: 26.10.2012
(51) Int. Cl.: B23K 31/00, B23K 9/02, B23K 9/23, B23K 35/30

(54) **WELDING METHOD AND WELD JOINT**
SCHWEISSVERFAHREN UND SCHWEISSVERBINDUNG
PROCÉDÉ DE SOUDAGE ET JOINT DE SOUDURE

(30) Priority: 09.11.2011 JP 2011245441
(43) Date of publication of application: 17.09.2014
(73) Proprietor: Osaka University, Suita-shi, Osaka 565-0871 (JP)
(72) Inventor: SHIGA, Chiaki, Suita-shi Osaka 565-0871 (JP); HIRAOKA, Kazuo, Suita-shi Osaka 565-0871 (JP)
(74) Representative: Hamer, Christopher K.
(86) International application number: PCT/JP2012/077790
(87) International publication number: WO 2013/069484

(56) References cited:
- EP-A1- 1 550 526
- JP-A- H0 724 570
- JP-A- H09 253 843
- JP-A- 2000 288 728
- JP-A- 2002 113 577
- JP-A- 2003 103 393
- JP-A- 2008 023 570

## Description

### Technical Field

The present invention relates to a welding method in box-welding a gusset plate to high-tensile steel in a welded structure using the high-tensile steel.

### Background Art

For the purpose of increasing in size of welded structures such as ships, marine structures, bridges and the like and for weight saving and safeness accompanying the increase in size, high-tensile steels having tensile strength enhanced from conventional 500 MPa up to 1000 MPa are used recently.

In proportion to increase in tensile strength, also fatigue strengths of a base material typified by fatigue life and fatigue limit thereof increase. However, in a welded part, fatigue strengths are not improved so long as conventional welding technologies are used.

There are various welded parts such as a butt-welded part, a fillet-welded part, a box-welded part and the like. Especially, a box-welded part formed by welding a gusset plate to high-tensile steel as a base material shows the lowest fatigue strength (about 1/7 as compared with the base material), therefore, the design load (permissible load) of a welded structure shall be determined by this box-welded part.

However, in the case of use of a conventional welding technology for this box-welded part of a gusset plate, the fatigue strength of a welded part is not improved as described above. Thus, merits of weight saving and safeness due to use of above mentioned recent high-tensile steel having enhanced tensile strength cannot be performed sufficiently.

Decrease in fatigue strength in a conventional box-welded part of a gusset plate is attributed to significant degree of stress concentration derived from change of cross-sectional shape at a weld toe, and additionally, to extreme local increase in tensile force at a weld toe accompanied also by an adverse effect of generation of residual tensile stress due to welding heat stress.

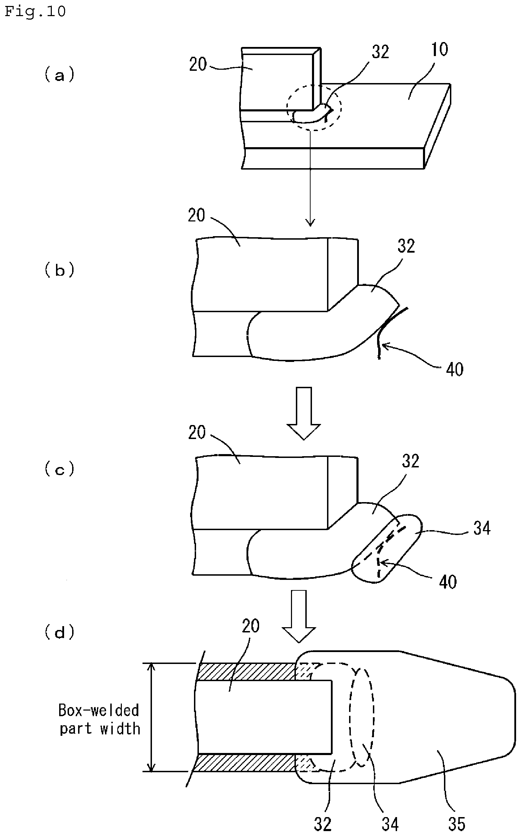

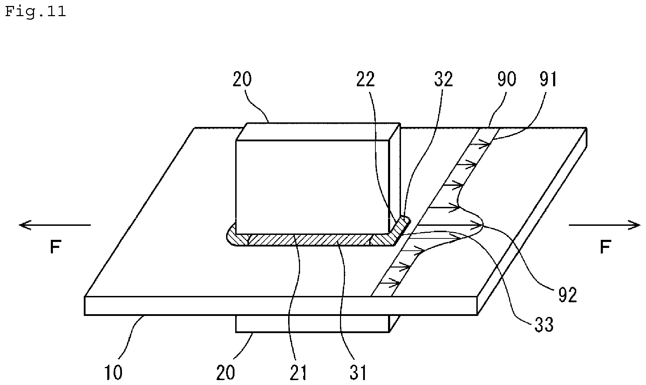

This fact will be illustrated using Fig. 11. Fig. 11 is a perspective view showing the condition of tensile force generated on a flat plate in applying external load under condition of attachment of a gusset plate. In Fig. 11, 10 represents a flat plate as a base material and 20 represents a gusset plate. The gusset plate 20 is welded to the flat plate 10 at a lower lateral side part 21 and a lower toe 22, thereby forming a welded part 31 at lower lateral side and a box-welded part 32.

F represents external tensile load in the longitudinal direction of the flat plate 10, 90 represents distribution of actual tensile force along the short side direction (width direction) passing a weld toe 33 of the box-welded part 32 generating on the flat plate 10 by load, stress concentration and residual tensile stress, 91 represents stress of the end part of the short side direction of the flat plate 10, and 92 represents stress of the central part.

As shown in Fig. 11, stress generating on the flat plate 10 is the largest at the weld toe 33 of the box-welded part 32.

The gusset plate 20 and weld metals of weld parts of 31 and 32 expand by heat in welding and contracts by the subsequent cooling. However, expansion and contraction of the flat plate 10 are smaller than expansion and contraction of the gusset plate 20, thus, residual tensile stress ascribable to welding heat stress is generated in the welded parts 31, 32 of the gusset plate 20, and especially this residual tensile stress is the largest at the weld toe 33 of the box-welded part 32.

As described above, fatigue strength drops significantly at the box-welded part of the gusset plate.

For improving fatigue strength, technologies of performing a hammer peening treatment and a laser peening treatment on a welded part have long been developed. However, these are not generally in widespread use due to large workload.

In this decade, a low transformation temperature welding material which may lower a martensitic transformation temperature of weld metal and a welding procedure using such a welding material have been developed in order to reduce residual tensile stress of the welded parts (Patent documents 1 to 6). Even if such technologies are used, however, the degree of improvement in fatigue life of a welded part is still at most only about 1.5 to 2-fold as compared with conventional technologies.

### Prior Technological Document

### Patent Document

Patent document 1: JP11-138290A
Patent document 2: JP2000-288728A
Patent document 3: JP2000-17380A
Patent document 4: JP2002-113577A
Patent document 5: JP2003-275890A
Patent document 6: JP2003-290972A

The preambles of claims 1 and 8 are based on JP2003103393 or equally on EP 1550526.

### Summary of the Invention

### Problem to be Solved by the Invention

In view of the above-described problems of conventional technologies, the present invention has an object of providing a welding method capable of dramatically improving fatigue strength of a box-welded part of a gusset plate and high-tensile steel, and a weld joint welded by this welding method.

### Means for Solving the Problem

The present inventors have intensively studied to solve the above-described problems and, focusing attention on the length of a bead from the end of a gusset plate at a box-welded part, performed ordinary box welding at a bead length of 7 mm generally called leg length, then, formed elongation beads of various lengths at the leading end of this box-welded part, and conducted an experiment on relation between the length of an elongation bead and the degree of stress concentration at the leading end of the elongation bead.

Main experimental conditions in this case are as described below. That is, 800 MPa high-tensile steel (size: width 200xlength 1000xthickness 20 mm) was used as a base material and 800 MPa high-tensile steel (size: width 50xlength 200xthickness 20 mm) was used as a gusset plate.

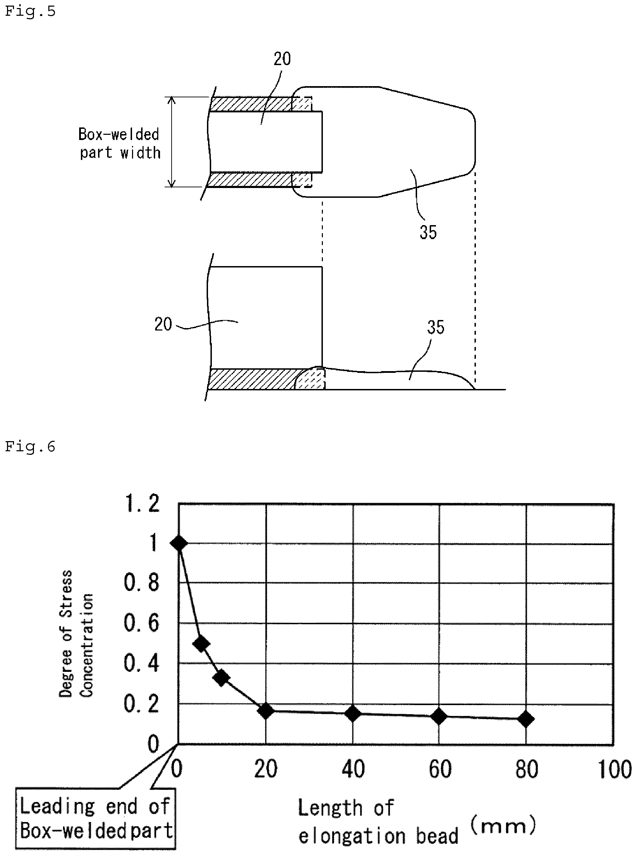

The experimental results are shown in Fig. 6. In Fig. 6, the ordinate axis shows the degree of stress concentration and the abscissa axis shows the length of an elongation bead elongated from the leading end of a box-welded part. The degree of stress concentration is indicated in terms of ratio to stress at weld toe position in the case of usual box welding having no elongation bead formed. Fig. 6 teaches that the degree of stress concentration drops steeply in an area of short elongation beads, and with an elongation bead having a length of 7 mm, the degree of stress concentration decreases to about 0.4 and with an elongation bead having a length of 10 mm, the degree of stress concentration decreases sufficiently to about 0.3. It is understood that the ratio is somewhat smaller than 0.2 and stable when the length is 20 mm or more.

As described above, by providing an elongation bead having a length of 10 mm or more, stress concentration is relaxed sufficiently, consequently leading to improvement in fatigue strength at a box-welded part.

Next, the present inventors conducted an experiment on relation between residual tensile stress ascribable to welding heat stress, the length of an elongation bead, and the kind of a welding material. That is, ordinary box welding (bead length (leg length) 10 mm) was carried out using a conventional welding material and a low transformation temperature welding material giving a weld metal with martensitic transformation start temperature (Ms temperature) of 350°C or lower, then, residual tensile stress was measured at a surface position and a position of a depth of 5 mm at the leading end of the elongation bead, changing the length of an elongation bead.

The low transformation temperature welding material described above denotes a welding material which forms a weld metal having a Ms temperature of of 350°C or lower by welding with a material to be welded. The welding material itself has a Ms temperature of 250°C or lower.

Main experimental conditions in this case are as described below. That is, 800 MPa high-tensile steel (size: width 200xlength 1000xthickness 20 mm) was used as a base material and 800 MPa high-tensile steel (size: width 50xlength 200xthickness 20 mm) was used as a gusset plate. The chemical composition of a conventional welding material contains C 0.12 wt%, Ni 1.5 wt% and Mo 0.5 wt% and the chemical composition of the low transformation temperature welding material contains C 0.05 wt%, Cr 14 wt% and Ni 9 wt%.

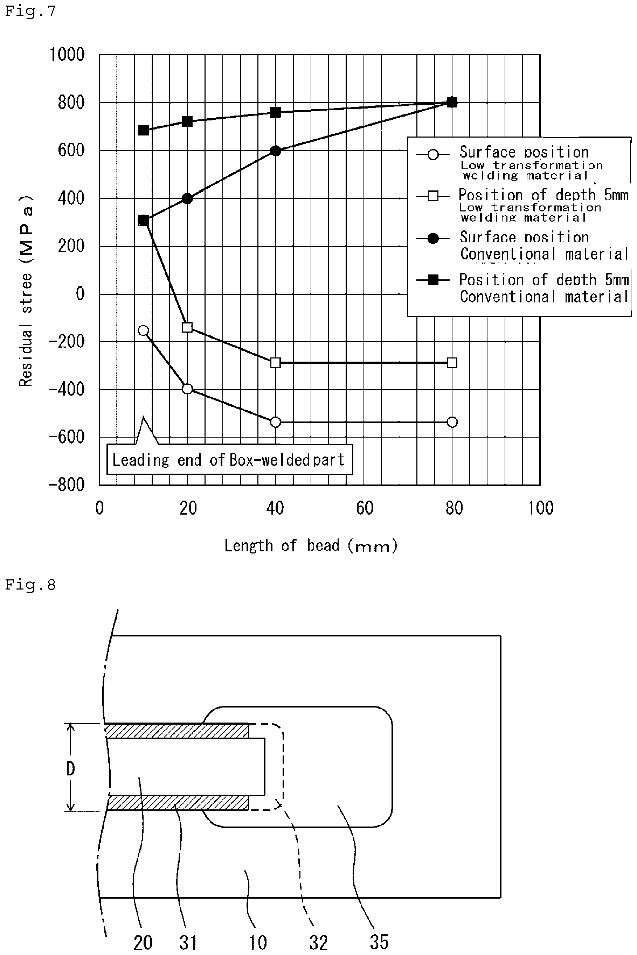

The measurement results are shown in Fig. 7. In Fig. 7, the ordinate axis shows residual stress and the abscissa axis shows the length of a bead from the end of a gusset plate (bead length at box-welded part). Residual stress at a surface position of a conventional welding material (indicated as "conventional material" in Fig. 7) is represented by ●, residual stress at a position of a depth of 5 mm thereof is represented by ■, residual stress at a surface position of a low transformation temperature welding material (indicated as "low transformation welding material" in Fig. 7) is represented by ○, and residual stress at a position of a depth of 5 mm thereof is represented by □. Residual tensile stress is denoted in a positive value and compression residual stress is denoted in a negative value. The measurement results mentioned above are obtained from residual stress measurement by neutron diffraction and analysis of stress by FEM (finite element analysis method).

In the case of use of a conventional welding material, when box welding is performed (bead length (leg length) 10 mm), the generated residual tensile stress is about 300 MPa at a surface position and about 680 MPa at a position of a depth of 5 mm, as shown in Fig. 7. When the bead becomes longer thereafter, residual tensile stress becomes larger at any positions, and when the bead length is 80 mm (elongation bead length: 70 mm), a large residual tensile stress of about 800 MPa is generated, as shown in Fig. 7.

In the case of use of a low transformation temperature welding material, residual tensile stress when box welding is performed (bead length (leg length) 10 mm) is 300 MPa at a position of a depth of 5 mm. However, residual tensile stress at a bead length of 17 mm (elongation bead length 7 mm) disappears. When the bead length becomes over 17 mm, compression residual stress is generated contrastingly. When the bead length becomes larger, this compression residual stress becomes larger, and finally, a large compression residual stress of about 300 MPa is generated.

Regarding the surface position, when box welding is performed, a compression residual stress of about 170 MPa is already generated, and at a position of a bead length of 80 mm, a compression residual stress of about 580 MPa is generated.

A length of 7 mm of the above-described elongation bead is also a length with which degree of stress concentration can be lowered sufficiently in Fig. 6 as described above.

It is understood as described above that between a conventional welding material and a low transformation temperature welding material, elongation of the bead length exerts an inverse influence on residual stress, and in the case of a low transformation temperature welding material, compression residual stress is surely generated by forming a bead having a length of 17 mm or more from the longitudinal end of a gusset plate (hereinafter, also referred to simply as "gusset plate end"), thus, fatigue strength at a box-welded part can be significantly improved.

It is understood from the above descriptions that by forming an elongation bead so as to give a bead length from the end of a gusset plate of 17 mm or more in parallel to the gusset plate using a low transformation temperature welding material giving a weld metal with a Ms temperature of 350°C or lower after ordinary box welding, stress concentration derived from a geometrical factor of a weld toe can be relaxed, and additionally, large compression residual stress can be generated, thereby, fatigue strength can be improved significantly.

Fatigue strength can be improved significantly likewise by also forming an elongation bead so as to give a bead length from the end of a gusset plate of 17 mm or more in parallel to the gusset plate using a low transformation temperature welding material giving a weld metal with a Ms temperature of 350°C or lower after ordinary box welding using a conventional welding material.

Since the bead length from the end of a gusset plate dominates strongly the content of residual stress, fatigue strength can be improved significantly also when a bead having a length of 17 mm or more is formed simultaneously with box welding, likewise when an elongation bead having a length of 17 mm or more is formed after ordinary box welding as described above.

For improving fatigue strength at a box-welded part, post treatments such as dressing and the like have been conventionally carried out after welding. However, improvement in fatigue strength by these treatments is not sufficient, and its effect is unstable.

In contrast, high fatigue strength can be stably obtained by forming a bead having a length of 17 mm or more using a low transformation temperature welding material giving a weld metal with a Ms temperature of 350°C or lower in the present invention.

The present invention is based on these findings, and the invention of Claim 1 is:
a welding method of welding a gusset plate to high-tensile steel by box welding, wherein a bead having a length of 17 mm or more extending from the end of the above-described gusset plate is formed in the longitudinal direction using a welding material giving a weld metal with a Ms temperature of 350°C or lower.

The invention of Claim 2 is the welding method according to Claim 1, wherein the above-described method of forming a bead is a bead formation method of further forming an elongation bead at the leading end of the bead at the longitudinal end of the above-described gusset plate formed by box welding, after the box welding.

The invention of Claim 3 is the welding method according to Claim 1, wherein the above-described method of forming a bead is a bead formation method of forming a bead having a length of 17 mm or more extending from the end of the above-described gusset plate in the longitudinal direction, in box welding.

The present invention further has the following characteristics.

The above-described bead having a length of 17 mm or more is formed in the longitudinal direction of a gusset plate. Though the bead width is not particularly restricted providing it is not smaller than the box-welded part width (D) shown in Fig. 8, from the standpoint of relaxation of stress concentration and generation of compression residual stress, it is preferably larger than the box-welded part width (D) as shown in Fig. 8.

That is, the invention of Claim 4 is the welding method according to any one of Claims 1 to 3, wherein the bead width of the above-described bead is larger than the box-welded part width.

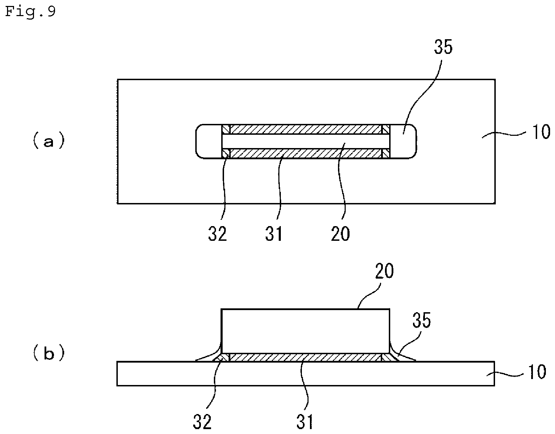

Next, an elongation bead is provided at the leading end of a bead part formed by ordinary box welding, and it may also be permissible that an elongation bead is provided from the end of a gusset plate so as to cover a box-welded part. In this case, fatigue strength can be further improved by forming an elongation bead in smooth form without producing level difference at the connection to the end of a gusset plate after box welding, as shown in Fig. 9.

Likewise, also in forming a long bead in box welding, fatigue strength can be further improved by forming the bead in smooth form without producing level difference at a connection to the end of a gusset plate.

That is, the invention of Claim 5 is the welding method according to any one of Claims 1 to 4, wherein a bead is formed while making a smooth connection to the longitudinal end of the above-described gusset plate.

Next, in the case of providing an elongation bead at the leading end of a bead part formed by box welding, after box welding, the elongation bead is usually provided so as to partially overlap the leading end of a box-welded part. Also in this case, it is preferable to provide an elongation bead in smooth form without producing level difference at a connection between the box-welded part and the elongation bead from the standpoint of improvement in fatigue strength.

That is, the invention of Claim 6 is the welding method according to Claim 1 or 2, wherein an elongation bead is formed while making a smooth connection to the above-described bead-welded part formed by box welding.

In a weld joint welded using the welding method described above, stress concentration is significantly relaxed and further, large compression residual stress is generated. Therefore, it can be provided as a weld joint having sufficiently improved fatigue strength.

That is, the invention of Claim 7 is a weld joint in which a gusset plate is welded to high-tensile steel using the welding method according to any one of Claims 1 to 6.

Next, the welding method according to the present invention exerts a significant effect on extension of fatigue life and fracture life in existing steel structures.

Namely, in infrastructures around the world, for example, in steel structures such as bridges, express ways and the like, repair and reinforcement were conducted periodically on a box-welded part in order to extend fatigue life and fracture life, at the present day. Also in conveyances and pressure containers such as ships and tanks, inspections and treatments are conducted in a like manner in order to extend fatigue life and fracture life.

For example, crack (fatigue crack) 40 is generated in some cases due to fatigue in use for a long period of time in a box-welded part 32 of a steel structure, as shown in Fig. 10 (a) and its enlarged view (b). This fatigue crack 40 is conventionally repaired by forming a repair-welded part 34 by conducting repair welding as shown in (c).

In conventional repairing methods, however, the length of the repair-welded part 34 is small, thus, stress concentration cannot be relaxed sufficiently and fatigue life and fracture life cannot be sufficiently extended.

In contrast, if the present invention is applied to a conventional repair-welded part formed previously, namely, a welding material giving a weld metal with a Ms temperature of 350°C or lower is used and an elongation bead is formed so as to give a bead length of 17 mm or more in the longitudinal direction of the end of a gusset plate of a box-welded part to attain repair, then, fatigue life and fracture life can be sufficiently extended as described above.

Here, the effect of extending fatigue life and fracture life is manifested also by applying formation of an elongation bead based on the present invention to an existing steel structure on which a repair-welded part is not formed beforehand, or on which a repair-welded part has been already formed.

The effect by applying the present invention can be manifested not only in repair in the case of generation of crack but also in reinforcement as prior prevention, and fatigue life and fracture life can be significantly extended likewise. As a result, the period of regular inspection can be extended significantly and maintenance cost can be reduced considerably.

In the above-described bead formation, it is preferable to form a bead with bead width larger than the box-welded part width of a box-welded part, and it is more preferable to form a bead while making a smooth connection to the leading end of the bead of a box-welded part, as described above.

Fig. 10 (d) shows a specific example of the repairing method. In Fig. 10(d), an elongation bead 35 having bead width larger than the box-welded part width of a box-welded part and having a length of 17 mm or more is formed in the longitudinal direction of the end of a gusset plate 20 of a box-welded part, so that the bead covers a repair-welded part 34, in addition to formation of the repair-welded part 34.

That is, the invention of Claim 8 is a welding method of repairing or reinforcing, by welding, a box-welded part composed of a gusset and a base material in an existing steel structure, wherein a bead is formed so that the length of the bead part extending from the end of the above-described gusset plate is 17 mm or more, in the longitudinal direction of the end of the gusset plate of the above-described box-welded part, using a welding material giving a weld metal with a Ms temperature of 350°C or lower.

The invention of Claim 9 is the welding method according to Claim 8, wherein a repair-welded part or a reinforcement-welded part is formed at the leading end of a bead of the above-described box-welded part, then, the above-described bead is formed.

The invention of Claim 10 is the welding method according to Claim 8 or 9, wherein the bead width of the above-described bead is larger than the box-welded part width.

Further, the invention of Claim 11 is the welding method according to any one of Claims 8 to 10, wherein the above-described bead is formed while making a smooth connection to the longitudinal end of the above-described gusset plate.

### Effect of the Invention

According to the present invention, the fatigue strength of a box-welded part between a gusset plate and high-tensile steel can be dramatically improved, thus, permissible load of a welded structure can be improved, and the tensile strength of the welded structure increases significantly. As a result, the present invention can significantly contribute to social needs for low carbon by means of weight saving and the like, further leading to improvement in safeness owing to increase in permissible stress.

Further, the life of a welded structure can be remarkably extended, thus, the present invention has merits also from the standpoint of repair and reinforcement of a structure. Most of structures 40 years old or more after postwar construction will outlive their usefulness in the next decade. The present invention is capable of manifesting a large effect on them also in the aspect of life extension by repair and reinforcement.

### Brief Explanation of Drawings

[Fig. 1]

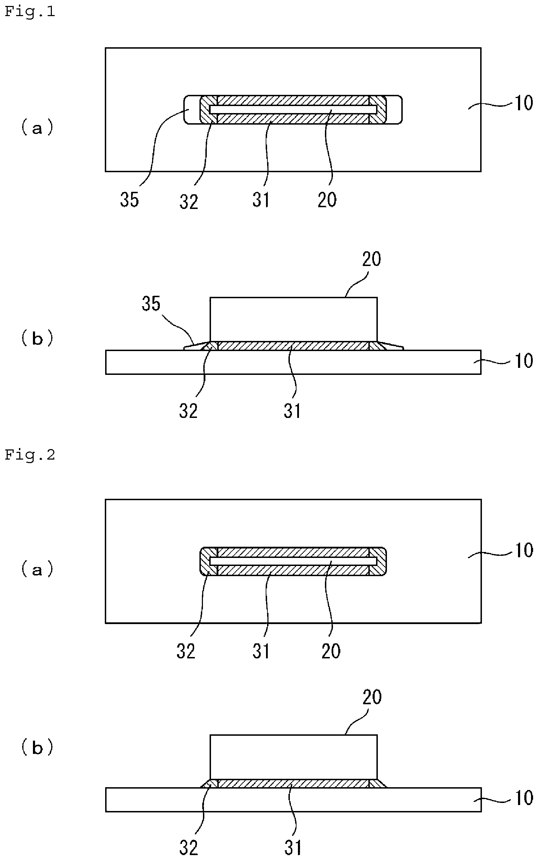

   Fig. 1 provides a plan view (a) and a side view (b) showing summary of a weld joint manufactured by the welding method of the present invention.
[Fig. 2]
   Fig. 2 provides a plan view (a) and a side view (b) showing summary of a weld joint manufactured by a conventional welding method.
[Fig. 3]

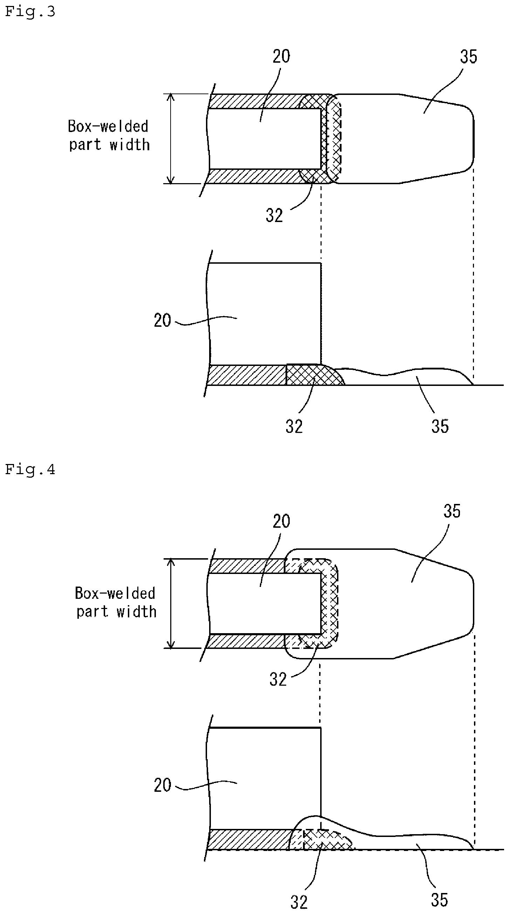

   Fig. 3 provides a plan view (a) and a side view (b) showing summary of another example of a weld joint manufactured by the welding method of the present invention.
[Fig. 4]
   Fig. 4 provides a plan view (a) and a side view (b) showing summary of another example of a weld joint manufactured by the welding method of the present invention.
[Fig. 5]
   Fig. 5 provides a plan view (a) and a side view (b) showing summary of another example of a weld joint manufactured by the welding method of the present invention.
[Fig. 6]
   Fig. 6 is a graph showing relation between the length of an elongation bead and degree of stress concentration.
[Fig. 7]
   Fig. 7 is a graph showing relation between the length of a bead formed at a box-welded part and residual stress.
[Fig. 8]
   Fig. 8 is a plan view showing summary of another example of the welding joint of the present invention.
[Fig. 9]
   Fig. 9 provides a plan view (a) and a side view (b) showing summary of another example of the welding joint of the present invention.
[Fig. 10]
   Fig. 10 is a view illustrating an example applying the welding method of the present invention to repair.
[Fig. 11]
   Fig. 11 is a perspective view showing the condition of tensile force generated on a flat plate in applying external tensile load under condition of attachment of a gusset plate.

### Modes for Carrying Out the Invention

The present invention will be illustrated based on embodiments below. The present invention is not limited to the following embodiments. In the scope identical and equivalent to the present invention, the following embodiments can be variously altered.

First, summery of a weld joint of the present invention and summery of a conventional weld joint will be explained using drawings. Fig. 1 shows a weld joint manufactured by the welding method of the present invention and Fig. 2 shows a weld joint manufactured by a conventional welding method. In Figs. 1, 2, (a) represents a plan view and (b) represents a side view, respectively.

In a conventional weld joint shown in Fig. 2, a flat plate 10 as a base material and a gusset plate 20 are welded using conventional box welding, to form a welded part 31 at the lower lateral side of a gusset plate 20 and a box-welded part 32.

In the weld joint of the present invention shown in Fig. 1, an elongation bead 35 is further formed at the leading end of the box-welded part 32 so that the bead length from the end of the gusset plate is 17 mm or more. By thus manufacturing a weld joint, fatigue strength is improved significantly as described above. It is preferable that formation of the elongation bead 35 is conducted before cooling of the bead temperature of the box-welded part 32 formed previously down to the Ms temperature. If the elongation bead 35 is provided after cooling down to the Ms temperature, a non-transformed area is formed on part of the surface due to re-heating and tensile stress is generated at the boundary with a transformed area, that is, this order is not preferable.

Next, preferable embodiments other than the bead forming method shown in Fig. 1 will be illustrated based on Figs. 3 to 5.

In the case of Fig. 3, an elongation bead 35 is formed with the same width as the box-welded part width while making a smooth connection, from a position near the leading end of the bead of the box-welded part 32, thereby providing a bead of prescribed length.

In the case of Fig. 4, an elongation bead 35 is formed with width larger than the box-welded part width from the end of a gusset plate so as to cover the whole bead of the box-welded part 32. In this case, it is preferable to form a bead in smooth form without producing level difference at a connection to the end of a gusset plate.

In the case of Fig. 5, a long bead is formed with width larger than the box-welded part width, from the end of a gusset plate, at one time in box welding. Also in this case, it is preferable to form a bead in smooth form without producing level difference at a connection to the end of a gusset plate.

### (Experiment-1)

Next, the results of an experiment conducted to show the excellent effect of the present invention will be described. In the experiment, ordinary box welding was conducted using a welding material having chemical composition containing C 0.1 wt% or less, Cr 8 to 13 wt%, Ni 5 to 12 wt% as base, and having a welded metal Ms temperature of 350°C or lower. Then, each elongation bead having length shown in Table 1 was formed using the same welding material. Then, degree of stress concentration at the leading end of each elongation bead and the magnitude of residual stress were measured. A load of stress range of 150 MPa (load of ±150MPa) was applied at a frequency of 10/second repeatedly as fatigue strength, and the number of repetition in breakage (fatigue break number) was measured. For comparison, ordinary box welding was conducted using a conventional welding material and the same measurement was conducted.

The bead length (leg length) in box welding was set at 7 mm as general bead length. As the base material, 800 MPa high-tensile steel (size: width 200 mm, length 1000 mm, thickness 20 mm) was used, and as the gusset plate, 800MPa high-tensile steel (size: height 50 mm, length 200 mm, thickness 20 mm) was used.

The measurement results are shown in Table 1 together. In Table 1, degree of stress concentration is indicted in terms of relative value with respect to 1 representing the degree of stress concentration in the weld joint in Fig. 2 manufactured using each welding material, namely, a weld joint having no elongation bead provided. Higher the numerical value indicates higher the degree of stress concentration. For residual stress, + denotes residual tensile stress and - denotes compression residual stress.

Fatigue strength is indicated based on the fatigue breakage number δ in the weld joint in Fig. 2 manufactured using a conventional welding material. This δ depends on the shape of a specimen, and for example, is about 5000000 in the case of a base material of width:70 mm, length:1000 mm and thickness 12 mm and a gusset plate of height 50 mm, length 100 mm and thickness 12 mm, and about 300000 in the case of a base material of width 160 mm, length 1000mm and thickness 20 mm and a gusset plate of height 50 mm, length 150 mm and thickness 20 mm.

**[Table 1]**

| Experi -ment | Welding material | Elongation bead length (mm) | Degree of stress concentration | Residual stress (MPa) | | Fatigue strength (based on breakage number) | remarks |
|---|---|---|---|---|---|---|---|
| | | | | Surface position | Position of depth of 5 mm | | |
| 1-1 | Low transformation temperature welding material | 0 | 1.0 | -150 | 300 | 1.5δ | (Comparative Example 1) |
| 1-2 | | 10 | 0.4 | -400 | -150 | 3δ | (Example 1) |
| 1-3 | | 20 | 0.3 | -550 | -300 | 6δ | (Example 2) |
| 1-4 | | 40 | 0.2 | -550 | -350 | 15δ | (Example 3) |
| 1-5 | | 60 | 0.2 | -550 | -350 | 15δ | (Example 4) |
| 1-6 | | 80 | 0.2 | -550 | -350 | 15δ | (Example 5) |
| 1-7 | Conventional welding material | 0 | 1.0 | 300 | 680 | δ | (Comparative Example 2) |

Table 1 teaches that by formation of an elongation bead of 10 mm, namely, a bead having a length of 17 mm, degree of stress concentration drops steeply from 1 to 0.4 and with elongation beads of 40 mm or more, degree of stress concentration remains 0.2 stably.

When only a box-welded part is formed and an elongation bead is not formed (Experiment Example 1-1), compression residual stress is generated on the surface, however, residual tensile stress is still generated at a position of a depth of 5mm, accordingly, fatigue strength is only 1.5-fold of conventional strength. By forming an elongation bead of 10 mm, however, compression residual stress is generated also at a position of a depth of 5mm, and fatigue strength increases up to 3-fold (Experiment Example 1-2) together with increase in compression residual stress at the surface. Further, with elongation beads of 40 mm or more, compression residual stress increases both at the surface and a position of a depth of 5mm, and fatigue strength increases significantly up to 15-fold (Experiment Examples 1-4 to 1-6).

In the above-described experiments, an elongation bead is formed after box welding, however, the same effect can be obtained even if a long bead is formed in box welding.

From the above descriptions, it is understood that fatigue strength can be dramatically improved by forming an elongation bead of 10 mm or more, namely, a bead having a length of 17 mm or more from the end of a gusset plate using a low transformation temperature welding material. Even if an elongation bead of 40 mm or more is formed, the effect of improving fatigue strength is saturated, thus, it is understood that it is most preferable to form an elongation bead of 40 mm, namely, a bead having a length of 47 mm from the end of a gusset plate, using a low transformation temperature welding material.

As described above, fatigue strength can be dramatically improved by lowering of degree of stress concentration and generation of compression residual stress, according to the present invention.

### (Experiment-2)

In the following procedure, the effect of the present invention in repair and reinforcement of a box-welded part in an existing steel structure was confirmed.

Specifically, an elongation bead 35 having a length of 40 mm was formed using a low transformation temperature welding material so as to cover a repair-welded part 34 as shown in Fig. 10(d), and degree of stress concentration at the weld toe, residual stress at the surface position and a position of a depth of 5 mm, and fatigue strength were measured.

The results are shown in Table 2. In Table 2, also the results when an elongation bead is formed for a reinforcement treatment in the same manner as in the case of repair are described.

**[Table 2]**

| Experiment Example | Box-welded part | Elongation bead length (mm) | | Degree of stress concentration | Residual stress (MPa) | | Fatigue strength | remarks |
|---|---|---|---|---|---|---|---|---|
| | | | | | Surface position | Position of depth of 5 mm | | |
| 2-1 | Box-welded part for repair | Conventional welding material | 0 | 1 | 300 | 680 | δ | (Comparative Example 3) |
| 2-2 | | Low trans -formation temperature welding material | 0 | 1 | -150 | 300 | δ | (Comparative Example 4) |
| 2-3 | | | 40 | 0.2 | -550 | -350 | 15δ | (Example 6) |
| 2-4 | Box-welded part for reinforce ment | Conventional welding material | 0 | 1 | 300 | 680 | δ | (Comparative Example 4) |
| 2-5 | | Low trans -formation temperature welding material | 0 | 1 | -150 | 300 | δ | (Comparative Example 6) |
| 2-6 | | | 40 | 0.2 | -550 | -350 | 15δ | (Example 7) |

Table 2 teaches that by providing an elongation bead by applying the present invention, fatigue strength can be dramatically improved and fatigue life and fracture life can be significantly extended, both in the case of repair and reinforcement.

### [DESCRIPTION OF THE REFERENCE NUMERALS]

10 flat plate
20 gusset plate
21 lower lateral side part of gusset plate
22 lower toe of gusset plate
31 welded part at lower lateral side part of gusset plate
32 box-welded part
33 weld toe of the box-welded part
34 repair-welded part
35 elongation bead
40 fatigue crack
90 distribution of actual tensile force
91 stress of the end part of the short side direction of flat plate
92 stress of the central part of the short side direction of flat plate

## Claims

1. A welding method of welding a gusset plate to high-tensile steel by box welding, wherein a bead extending from the end of the above-described gusset plate is formed in the longitudinal direction using a welding material giving a weld metal with a Ms temperature of 350°C or lower, **characterized in that** the bead has a length of 17 mm or more.

2. The welding method according to Claim 1, wherein the above-described method of forming a bead is a bead formation method of further forming an elongation bead at the leading end of the bead at the longitudinal end of the above-described gusset plate formed by box welding, after the box welding.

3. The welding method according to Claim 1, wherein the above-described method of forming a bead is a bead formation method of forming a bead having a length of 17 mm or more extending from the end of the above-described gusset plate in the longitudinal direction, in box welding.

4. The welding method according to any one of Claims 1 to 3, wherein the bead width of the above-described bead is larger than the box-welded part width.

5. The welding method according to any one of Claims 1 to 4, wherein a bead is formed while making a smooth connection to the longitudinal end of the above-described gusset plate.

6. The welding method according to Claim 1 or 2, wherein an elongation bead is formed while making a smooth connection to the above-described bead-welded part formed by box welding.

7. A weld joint in which a gusset plate is welded to high-tensile steel using the welding method according to any one of Claims 1 to 6.

8. A welding method of repairing or reinforcing, by welding, a box-welded part composed of a gusset and a base material in an existing steel structure, wherein a bead is formed in the longitudinal direction of the end of the gusset plate of the above-described box-welded part, using a welding material giving a weld metal with a Ms temperature of 350°C or lower, **characterized in that** the length of the bead part extending from the end of the above described gusset plate is 17 mm or more.

9. The welding method according to Claim 8, wherein a repair-welded part or a reinforcement-welded part is formed at the leading end of a bead of the above-described box-welded part, then, the above-described bead is formed.

10. The welding method according to Claim 8 or 9, wherein the bead width of the above-described bead is larger than the box-welded part width.

11. The welding method according to any one of Claims 8 to 10, wherein the above-described bead is formed while making a smooth connection to the longitudinal end of the above-described gusset plate.

## Patentansprüche

1. Schweißverfahren zum Verschweißen eines Knotenblechs an hochfestem Stahl durch Box-Schweißen, wobei eine Schweißraupe, die sich von dem Ende des oben beschriebenen Knotenblechs erstreckt, in Längsrichtung unter Verwendung eines Schweißmaterials gebildet wird, wodurch ein Schweißmetall mit einer Ms-Temperatur von 350 °C oder niedriger erzeugt wird, **dadurch gekennzeichnet, dass** die Schweißraupe eine Länge von 17 mm oder mehr aufweist.

2. Schweißverfahren nach Anspruch 1, wobei das oben beschriebene Verfahren zum Bilden einer Schweißraupe ein Schweißraupenbildungsverfahren ist, bei dem nach dem Box-Schweißen eine Verlängerungsschweißraupe am vorderen Ende der Schweißraupe am Längsende des oben beschriebenen Knotenblechs gebildet wird, das durch Box-Schweißen gebildet wird.

3. Schweißverfahren nach Anspruch 1, wobei das oben beschriebene Verfahren zum Bilden einer Schweißraupe ein Schweißraupenbildungsverfahren ist, bei dem eine Schweißraupe mit einer Länge von 17 mm oder mehr, die sich von dem Ende des oben beschriebenen Knotenblechs in Längsrichtung erstreckt, durch Box-Schweißen gebildet wird.

4. Schweißverfahren nach einem der Ansprüche 1 bis 3, wobei die Schweißraupenbreite der oben beschriebenen Schweißraupe größer ist als die Box-verschweißte Teilbreite.

5. Schweißverfahren nach einem der Ansprüche 1 bis 4, wobei eine Schweißraupe gebildet wird, während eine glatte Verbindung mit dem Längsende des oben beschriebenen Knotenblechs hergestellt wird.

6. Schweißverfahren nach Anspruch 1 oder 2, wobei eine Verlängerungsschweißraupe gebildet wird, während eine glatte Verbindung mit dem oben beschriebenen Schweißraupenverschweißten Teil hergestellt wird, das durch Box-Schweißen gebildet wird.

7. Schweißnaht, bei der ein Knotenblech unter Verwendung des Schweißverfahrens nach einem der Ansprüche 1 bis 6 mit hochfestem Stahl verschweißt wird.

8. Schweißverfahren zum Reparieren oder Verstärken eines Box-verschweißten Teils, das aus einem Knotenblech und einem Basismaterial in einer bestehenden Stahlkonstruktion besteht, durch Schweißen, wobei eine Schweißraupe in Längsrichtung des Endes des Knotenblechs des oben beschriebenen Box-geschweißten Teils unter Verwendung eines Schweißmaterials gebildet wird, wodurch ein Schweißmetall mit einer Ms-Temperatur von 350 °C oder niedriger gebildet wird, **dadurch gekennzeichnet, dass** die Länge des Schweißraupenteils, das sich von dem Ende der oben beschriebenen Eckplatte erstreckt, 17 mm oder mehr beträgt.

9. Schweißverfahren nach Anspruch 8, wobei ein reparaturgeschweißtes Teil oder ein verstärkungsgeschweißtes Teil am vorderen Ende einer Schweißraupe des oben beschriebenen Box-geschweißten Teils gebildet wird, wobei daraufhin die oben beschriebene Schweißraupe gebildet wird.

10. Schweißverfahren nach Anspruch 8 oder 9, wobei die Schweißraupenbreite der oben beschriebenen Schweißraupe größer ist als die Box-verschweißte Teilbreite.

11. Schweißverfahren nach einem der Ansprüche 8 bis 10, wobei die oben beschriebene Schweißraupe gebildet wird, während eine glatte Verbindung mit dem Längsende des oben beschriebenen Knotenblechs hergestellt wird.

## Revendications

1. Procédé de soudage servant à souder une plaque de gousset à de l'acier à haute résistance à la traction par une opération de soudage en boîte, dans lequel un cordon s'étendant depuis l'extrémité de la plaque de gousset décrite ci-dessus est formé dans la direction allant dans le sens longitudinal en utilisant un matériau de soudage donnant un métal soudé ayant une température Ms de 350°C ou moins, **caractérisé en ce que** le cordon a une longueur de 17 mm ou plus.

2. Procédé de soudage selon la revendication 1, dans lequel le procédé décrit ci-dessus consistant à former un cordon est un procédé de formation de cordon consistant par ailleurs à former un cordon d'allongement au niveau de l'extrémité avant du cordon au niveau de l'extrémité longitudinale de la plaque de gousset décrite ci-dessus formée par une opération de soudage en boîte, après l'opération de soudage en boîte.

3. Procédé de soudage selon la revendication 1, dans lequel le procédé décrit ci-dessus consistant à former un cordon est un procédé de formation de cordon consistant à former un cordon ayant une longueur de 17 mm ou plus s'étendant depuis l'extrémité de la plaque de gousset décrite ci-dessus dans la direction allant dans le sens longitudinal, dans une opération de soudage en boîte.

4. Procédé de soudage selon l'une quelconque des revendications 1 à 3, dans lequel la largeur du cordon du cordon décrit ci-dessus est supérieure à la largeur de la partie soudée en boîte.

5. Procédé de soudage selon l'une quelconque des revendications 1 à 4, dans lequel un cordon est formé tout en effectuant un raccordement lisse au niveau de l'extrémité longitudinale de la plaque de gousset décrite ci-dessus.

6. Procédé de soudage selon la revendication 1 ou la revendication 2, dans lequel un cordon d'allongement est formé tout en effectuant un raccordement lisse au niveau de la partie soudée à cordon décrite ci-dessus formée par une opération de soudage en boîte.

7. Joint de soudure dans lequel une plaque de gousset est soudée à de l'acier à haute résistance à la traction en utilisant le procédé de soudage selon l'une quelconque des revendications 1 à 6.

8. Procédé de soudage consistant à réparer ou renforcer, par soudage, une partie soudée en boîte composée d'un gousset et d'un matériau de base dans une structure d'acier existante, dans lequel un cordon est formé dans la direction allant dans le sens longitudinal de l'extrémité de la plaque de gousset de la partie soudée en boîte décrite ci-dessus, en utilisant un matériau de soudage donnant un métal soudé ayant une température Ms de 350°C ou moins, **caractérisé en ce que** la longueur de la partie cordon s'étendant depuis l'extrémité de la plaque de gousset décrite ci-dessus est de 17 mm ou plus.

9. Procédé de soudage selon la revendication 8, dans lequel une partie soudée de réparation ou une partie soudée de renfort est formée au niveau de l'extrémité avant d'un cordon de la partie soudée en boîte décrite ci-dessus, puis, le cordon décrit ci-dessus est formé.

10. Procédé de soudage selon la revendication 8 ou la revendication 9, dans lequel la largeur du cordon du cordon décrit ci-dessus est supérieure à la largeur de la partie soudée en boîte.

11. Procédé de soudage selon l'une quelconque des revendications 8 à 10, dans lequel le cordon décrit ci-dessus est formé tout en effectuant un raccordement lisse au niveau de l'extrémité longitudinale de la plaque de gousset décrite ci-dessus.
